## Europäisches Patentamt

## European Patent Office

## Office européen des brevets

(19)

(11) Veröffentlichungsnummer: **0 128 859**
**A1**

## EUROPÄISCHE PATENTANMELDUNG

(12)

(21) Anmeldenummer: **84810154.9**

(22) Anmeldetag: **30.03.84**

(51) Int. Cl.³: **B 05 D 1/26**, B 05 C 5/02, A 61 J 1/06, C 03 B 33/06

(30) Priorität: **29.04.83 CH 2298/83**

(43) Veröffentlichungstag der Anmeldung: **19.12.84 Patentblatt 84/51**

(84) Benannte Vertragsstaaten: **AT BE CH DE FR GB IT LI LU NL SE**

(71) Anmelder: **FORMA-VITRUM AG, St. Josefenstrasse 20, CH-9001 St. Gallen (CH)**

(72) Erfinder: **Schwendener, Heinrich, Peter-und-Paul-Strasse 44, CH-9000 St. Gallen (CH)**
Erfinder: **Suter, Thomas, Schlossstrasse 57, CH-9100 Herisau (CH)**

(74) Vertreter: **Wenger, René et al, Hepp & Partner AG Marktgasse 18, CH-9500 Wil (CH)**

(54) **Verfahren zum Auftragen einer flüssigen oder pastösen Masse auf Glasampullen und Vorrichtung zur Durchführung des Verfahrens.**

(57) Der Auftrag der Masse (1) auf die Ampullen (2) erfolgt über eine Kanüle (7), die an einer Haltevorrichtung (12) befestigt ist. Die Haltevorrichtung (12) kann mit Hilfe einer Führungsvorrichtung (18) auf die in einer Halterung (11) fixierte Ampulle abgesenkt werden. Nach dem Anliegen der Kanüle (7) auf der Oberfläche der Ampulle wird mit Hilfe eines Druckstosses die aufzutragende Masse aus der Kanüle (7) gepresst. Ein optischer Abtastfühler (15) kann das Vorhandensein einer Ampulle in der Halterung (11) überprüfen.

EP 0 128 859 A1

Verfahren zum Auftragen einer flüssigen oder pastösen Masse
auf Glasampullen und Vorrichtung zur Durchführung des Verfahrens

Die Erfindung betrifft ein Verfahren gemäss dem Oberbegriff von
Patentanspruch 1. Es ist bereits seit einiger Zeit bekannt und
gebräuchlich, an Glasampullen durch Aufschmelzen einer Fritte
eine Sollbruchstelle zu erzeugen. Auf diese Weise ist das Anfeilen einer Ampulle nicht mehr nötig. Die Fritte enthält in der
Regel einen Farbstoff, so dass die Sollbruchstelle auch optisch
sichtbar ist. Die chemische Zusammensetzung der Fritte und deren
Einfluss auf den Kontraktionskoeffizienten sind dem Fachmann
bereits bekannt. Sie sind beispielsweise in der DE-C- 867 291
beschrieben. Auch die physikalische Einwirkung der Fritte auf
die Glasoberfläche wurde bereits untersucht und beschrieben. So
beispielsweise von Christen Klaus in der Zeitschrift "Die pharmazeutische Industrie" Band 30 (1968) S. 15 und 16.

Bei den bisher bekannten Verfahren wird die Masse an der vorgesehenen Sollbruchstelle ringförmig aufgetragen (colour break
ring). Dazu werden die Ampullen derart eingespannt, dass sie
sich um ihre eigene Achse drehen können. Der Auftrag erfolgt mit
einer rotierenden Scheibe, die in vertikaler Lage an die drehbar
gelagerte Ampulle angepresst wird und die auf der Unterseite in
einen Behälter mit der flüssigen Masse eingetaucht ist. Ein
derartiges Verfahren und die dazu erforderliche Vorrichtung ist
in der FR-A- 1 122 010 beschrieben. Anstelle der Scheibe kann
auch eine endlose Fadenschleife verwendet werden.

Ein Nachteil der bekannten Auftragverfahren besteht darin, dass die Schichtdicke der aufgetragenen Masse variiert. Dies hängt damit zusammen, dass die Scheibe bzw. der Faden nicht immer die gleiche Menge Masse transportieren kann. Die Transportmenge hängt vom Pegelstand der Masse im Vorratsbehälter, von deren augenblicklicher Viskosität und von der Drehzahl der Scheibe bzw. des Fadens ab. Unterschiedliche Schichtdicken der Fritte auf der Ampulle führen jedoch dazu, dass die Bruchstelle unregelmässig verläuft. Ein weiterer Nachteil der bekannten Verfahren besteht darin, dass der Vorratsbehälter mit der flüssigen Masse wenigstens teilweise offen ist, so dass einerseits Schmutzpartikel in die Masse gelangen können und anderseits die Flüssigkeit schneller verdunstet, was eine zunehmende Verringerung der Viskosität zur Folge hat. Ausserdem ist der Verbrauch sehr gross, da nur ein geringer Prozentsatz der im Vorratsbehälter befindlichen Masse tatsächlich verbraucht wird. Der Rest muss nach Beendigung einer Arbeitsschicht weggeschüttet werden. Zudem ist der Aufwand zum Reinigen der gesamten Beschichtungsvorrichtung beträchtlich.

Es ist daher Aufgabe der Erfindung, ein Verfahren und eine Vorrichtung der eingangs genannten Art zu schaffen, welche die Nachteile des Bekannten vermeiden und mit deren Hilfe eine Rationalisierung des Beschichtungsvorgangs möglich ist. Eine weitere Aufgabe der Erfindung besteht darin, die Masse gleichmässig aufzutragen und vor Verunreinigungen zu schützen. Ferner soll der Beschichtungsvorgang flexibler dem Maschinentakt der automatischen Ampullenherstellung angepasst werden, so dass allenfalls ohne Beeinträchtigung des Beschichtungsvorgangs Veränderungen des Maschinentakts möglich sind. Diese Aufgaben werden in verfahrensmässiger Hinsicht durch die Merkmale im Kennzeichen von Patentanspruch 1 und in vorrichtungsmässiger Hinsicht durch die Merkmale im Kennzeichen von Patentanspruch 11 gelöst.

Das Auftragen der Masse mit Hilfe einer Kanüle hat den Vorteil, dass mit einem geschlossenen System gearbeitet werden kann, was ein Eintrocknen der Masse ausschliesst. Mit Hilfe des Druckstosses kann über die Kanüle die aufzutragende Masse genau dosiert werden.

Besonders vorteilhaft ist es, wenn vor dem Auslösen des Druckstosses das Vorhandensein einer Ampulle in der gewünschten Relativlage abgetastet wird und wenn der Druckstoss beim Fehlen einer Ampulle oder bei einem Abweichen von der gewünschten Relativlage unterbleibt. Auf diese Weise wird vermieden, dass beim Fehlen einer Ampulle unnötig Masse aus der Kanüle ausgestossen wird, oder dass bei einer falschen Lage der Ampulle diese nicht richtig beschichtet wird. Das Abtasten erfolgt vorteilhaft optisch, so dass keine mechanischen Kräfte auf die Ampulle einwirken.

Das erfindungsgemässe Verfahren erlaubt grundsätzlich zwei verschiedene Beschichtungsarten. Die Kanüle kann zum Auftragen eines Ringes oberhalb der Mittelachse beispielsweise durch eine Absenkbewegung tangential an die Ampulle angelegt werden und die Ampulle kann in ihrer Relativlage um die Mittelachse gedreht werden. Auf diese Weise erhält man eine Ampulle mit einer ringförmigen Fritte, wie sie durch an sich bekannte Verfahren bereits bekannt ist. Durch das tangentiale Anliegen der Kanüle an der rotierenden Ampulle wird die ausgestossene Masse gleichmässig über den gesamten Umfang verteilt. Die Breite des Brechringes und die Auftragsdicke können durch den Durchmesser der verwendeten Kanüle bzw. durch den Druckstoss bestimmt werden.

Die Kanüle kann aber auch zum Auftragen eines Punktes von oben auf die Ampulle abgesenkt werden, wobei die Kanüle auf die Mittelachse der Ampulle gerichtet ist. Wie nachstehend noch beschrieben wird, hat ein punktförmiger Auftrag in speziellen Anwendungsfällen gegenüber einem ringförmigen Auftrag verschiedene Vorteile. Das erfindungsgemässe Verfahren erlaubt nun auf einfachste Weise das Anbringen eines genau dosierten punktförmigen Auftrags. Nach dem Ausstossen der Masse aus der Kanüle wird diese wieder angehoben, so dass die nächste Ampulle unter die Kanüle geschoben werden kann. Die Kanülenspitze berührt somit die Ampullenoberfläche nur kurzzeitig, so dass praktisch kaum eine Wärmeübertragung stattfindet, welche ein Verkrusten der Kanülenspitze verursachen könnte.

Die Handhabung der Ampulle wird für den Verbraucher ganz wesentlich vereinfacht, wenn auf der gleichen, parallel zur Mittelachse verlaufenden Mantellinie, auf welcher der Punkt liegt, eine Farbmarkierung aufgetragen wird. Je nach Glasfarbe ist der Brechpunkt nicht sofort sichtbar, so dass die Farbmarkierung dem Verbraucher immer anzeigt, wie die Ampulle zum Aufbrechen zu halten ist.

Eine Qualitätssicherung wird erzielt, wenn nach dem Auslösen des Druckstosses das Vorhandensein der Masse auf der Ampulle optisch abgetastet wird und wenn Ampullen mit fehlerhaftem oder fehlendem Auftrag mit einer Ausstosseinrichtung ausgeschieden werden. Die optische Abtastvorrichtung kann ausserdem derart mit der gesamten Anlage gekoppelt werden, dass z.B. ein Alarmsignal ausgelöst wird, wenn nach einer bestimmten Anzahl Arbeitstakten keine beschichteten Ampullen mehr abgetastet werden.

Wenn die Masse aus einer austauschbaren Vorratspatrone aufgetragen wird, können die erforderlichen manuellen Arbeiten auf ein Minimum reduziert werden. Die Grösse der Vorratspatrone kann derart gewählt werden, dass deren Inhalt für eine Maschinenschicht ausreicht. Beim Beginn einer neuen Schicht muss somit nur noch die vorbereitete und gefüllte Patrone in die Vorrichtung eingeschoben werden. Reinigungsarbeiten fallen praktisch völlig weg und der Ausnützungsgrad der Masse ist optimal, da keine eingetrocknete oder verunreinigte Masse zurückbleibt.

Das Austauschen der Patrone ist besonders einfach, wenn die Haltevorrichtung ein Patronenlager zur Aufnahme der Vorratspatrone

- 5 -

0128859

aufweist und wenn die Kanüle fest mit der Vorratspatrone verbunden ist. Das Patronenlager kann derart ausgebildet werden, dass die Relativlage der Kanüle genau definiert ist. Kanülen und Vorratspatronen sind als billige Massenartikel im Handel erhältlich, so dass die Vorratspatrone nach dem Gebrauch zusammen mit der Kanüle entfernt und weggeworfen werden kann. Dadurch entfallen aufwendige Reinigungsarbeiten an der Kanüle. Jede neu eingesetzte Vorratspatrone ist unmittelbar einsatzbereit. Wenn die Haltevorrichtung eine Spannvorrichtung zum Einspannen der Vorratspatrone in das Patronenlager aufweist, wird auf einfache Weise verhindert, dass sich die Kanülenspitze beim Betrieb der Vorrichtung verschieben kann. Ausserdem ist dadurch gewährleistet, dass beim Austauschen der Vorratspatrone die Kanüle immer in der gleichen Lage ist. Ein Positionieren der Kanüle ist dadurch nicht erforderlich.

Besonders vorteilhaft ist es, wenn die Haltevorrichtung in vertikaler Richtung federnd mit der Führungsvorrichtung verbunden ist. Auf diese Weise liegt die Oeffnung der Kanüle immer auf der Oberfläche der Ampulle, was einen gleichmässigen Auftrag gewährleistet. Ausserdem haben die Ampullen im Durchmesser gewisse Toleranzschwankungen, welche durch die federnde Lagerung ausgeglichen werden.

Wenn die Kanüle in einer relativ zur Haltevorrichtung fest montierten Kanülenführung geführt ist, wird eine besonders hohe Präzision erreicht. Es wird dadurch zuverlässig verhindert, dass z.B. schräg eingespannte Kanülen zu einem Fehlauftrag führen.

Bei Ampullen mit einem etwa zylindrischen Ampullenkörper und einem vom Ampullenkörper abbrechbaren Spiess können in bestimmten Anwendungsfällen besonders gute Resultate erzielt werden, wenn die Masse im Bereich des Uebergangs vom Ampullenkörper in den Spiess punktförmig aufgetragen ist. Der punktförmige Auftrag eignet sich somit insbesondere für sogenannte Zylinderspiessampullen oder für Ampullen mit Einschnürung und Zwiebel am Ueber-

gang zwischen Ampullenkörper und Spiess, z.B. gemäss DIN-Standard 58'377. Eine ringförmige oder auch nur eine strichartige Fritte kann in bestimmten Fällen zu einer unregelmässigen Bruchstelle oder gar zu einem Splitterbruch führen. Der Grund liegt darin, dass innerhalb der durch die Fritte bedeckten Glasfläche der Verlauf der Bruchstelle bei Krafteinwirkung nicht genau definiert ist. Bei zunehmender Fläche der Fritte tritt somit eine überdefinierte Bruchstelle auf, die zu unregelmässigen Brüchen führen kann. Dieser Nachteil wird durch den punktförmigen Auftrag völlig ausgeschaltet. Dazu ist es erforderlich, dass der Auftrag im Bereich des Übergangs vom Ampullenkörper in den Spiess, oder, wo vorhanden, im Bereich der Einschnürung erfolgt, da dadurch einerseits der Bruch schon bei geringem Kraftaufwand erfolgt und anderseits die Bruchstelle praktisch plan verläuft. Die durch die punktförmige Fritte erzeugte Vorspannung genügt völlig, um die Brechstelle zu definieren. Dagegen ist das Risiko eines unbeabsichtigten Bruches bedeutend kleiner als bei einer ringförmigen Fritte, da beim Brechpunkt der Bruch nur eintritt, wenn die Kräfte in einem ganz bestimmten Winkel auf die Ampulle einwirken. Das reduzierte Brechrisiko wirkt sich ersichtlicherweise positiv aus bei der weiteren Verarbeitung der Ampulle und beim späteren Transport. Ein weiterer Vorteil des punktförmigen Auftrags besteht in der Einsparung von Masse. Ausserdem ist die Gefahr des Absplitterns der Fritte beim Brechen und der dadurch möglichen Verunreinigung des Ampulleninhalts auf ein Minimum reduziert. Bei konventionellen Ampullen wurden besonders vorteilhafte Resultate erzielt, wenn der punktförmige Auftrag einen Durchmesser von 1 bis 2,5 mm aufweist. Besonders gute Resultate werden erzielt, wenn die Schichtdicke des punktförmigen Auftrags im Zentrum am grössten ist und gegen die Randbereiche hin abnimmt. Daraus ergibt sich eine vorteilhafte Verteilung der Eindringtiefe der Risse in das Grundglas nach dem Einbrennen.

Ausführungsbeispiele der Erfindung sind in den Zeichnungen dargestellt und werden nachstehend genauer beschrieben. Es zeigen:

Figur 1    eine erfindungsgemässe Vorrichtung in stark vereinfachter Darstellungsweise,

Figur 2    ein Diagramm mit den einzelnen Arbeitsschritten,

Figur 3    die Position der Kanüle zum Anbringen einer ringförmigen Fritte,

Figur 4    die Position der Kanüle zum Anbringen einer punktförmigen Fritte,

Figur 5    das Kanülenende mit austretender Masse bei der Position
           gemäss Figur 4,

Figur 6    einen Querschnitt durch die Haltevorrichtung in vereinfachter Darstellungsweise,

Figur 7    einen Querschnitt durch einen punktförmigen Auftrag in
           stark vergrössertem Massstab.

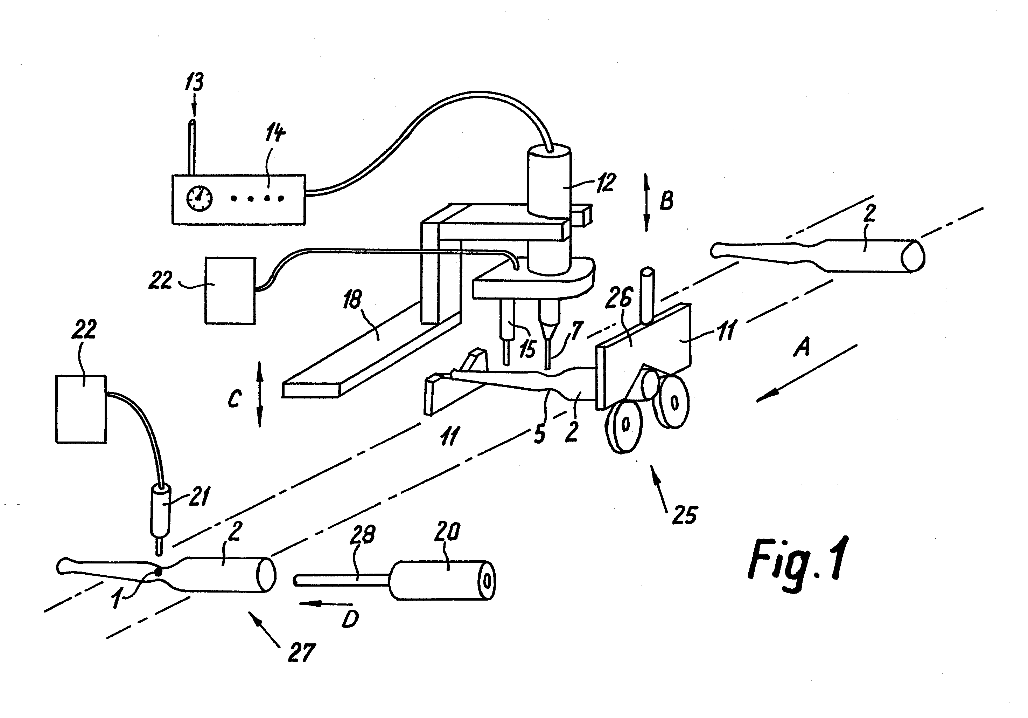

Wie in Figur 1 dargestellt gelangen die Ampullen 2 auf einer
nicht näher dargestellten Transportvorrichtung in Pfeilrichtung
A im Maschinentakt auf die eigentliche Beschichtungsstation 25.
Auf der Beschichtungsstation 25 wird die Ampulle 2 mit Hilfe
einer Halterung 11 in einer bestimmten Relativlage gehalten. Die
Halterung 11 besteht im wesentlichen aus je einer Lagerstelle im
Bereich des Bodens und im Bereich der Offnung der Ampulle. Ein
Greifer 26 kann in Pfeilrichtung B bewegt werden, um die Ampulle
festzuhalten. Soll die Ampulle zum Auftragen einer ringförmigen
Fritte um die eigene Achse gedreht werden, so besteht der Greifer 26 sowie das Auflager im Bereich des Bodens der Ampulle aus
Rollen.

In einer Haltevorrichtung 12 ist eine Kanüle 7 eingespannt. Die
Kanüle 7 bzw. die hier nicht sichtbare Vorratspatrone ist mit
der Masse 1 gefüllt, welche auf die Ampulle aufgetragen werden soll. Nach dem Einspannen der Ampulle in der Halterung 11 wird zuerst über einen optischen Abtastfühler 15, der an eine optische Sender/Empfängeranlage 22 angeschlossen ist, festgestellt, ob eine Ampulle in der richtigen Relativlage eingespannt ist. Gleichzeitig oder unmittelbar anschliessend wird die Haltevorrichtung 12 mit der Kanüle 7 mit Hilfe der in Pfeilrichtung C bewegbaren Führungsvorrichtung 18 abgesenkt. Dabei berührt die federnd gelagerte Kanüle 7 die Oberfläche der eingespannten Ampulle 2. Hat der optische Abtastfühler 15 das Vorhandensein einer Ampulle 2 ermittelt, wird über eine Steuervorrichtung 14 ein dosierter Druckstoss auf die Kanüle 7 ausgeübt, so dass eine bestimmte Menge der Masse aus der Kanüle auf die Oberfläche der Ampulle 2 austritt. Die Steuervorrichtung 14 ist an eine nicht näher dargestellte Druckerzeugungsvorrichtung 13 angeschlossen und sorgt dafür, dass der Druckstoss zum richtigen Zeitpunkt und in der richtigen Dosierung ausgelöst wird. Die Druckerzeugungsvorrichtung 13 kann beispielsweise auch die in vielen Industriebetrieben vorhandene zentrale Pressluftversorgung sein.

Nach dem Auftragen der Masse wird die Haltevorrichtung 12 wieder angehoben und die Ampulle 2 wird aus der Halterung 11 gelöst, um einer Prüfstation 27 zugeführt zu werden. Auf der Prüfstation 27 wird wiederum mit einem optischen Abtastfühler 21 festgestellt, ob die Masse 1 richtig aufgetragen ist oder nicht. Bei fehlerhaftem oder fehlendem Auftrag wird eine Ausstossvorrichtung 20 aktiviert, welche die fehlerhafte Ampulle in Pfeilrichtung D mit einem Ausstosser 28 aus der Transportvorrichtung auswirft. Nach dem Passieren der Prüfstation 27 gelangen die richtig beschichteten Ampullen in einen nicht dargestellten Ofen zum Einbrennen der Masse 1.

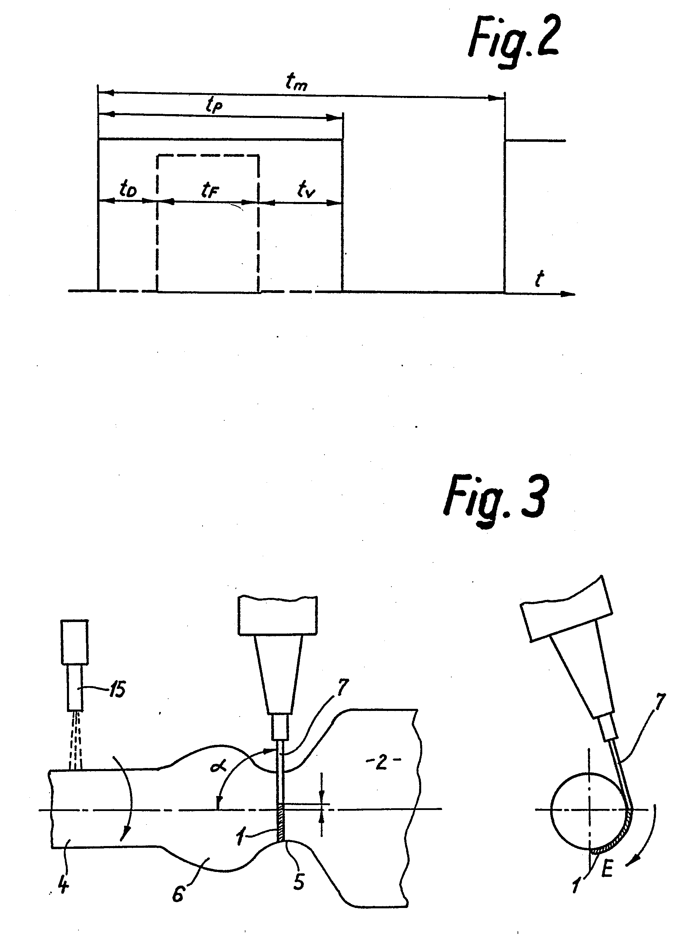

In Figur 2 ist der zeitliche Ablauf eines Arbeitstaktes auf der Beschichtungsstation 25 in einem Diagramm dargestellt. Mit $t_m$ ist ein einzelner Maschinentakt der Ampullenfertigungsanlage dargestellt. Dieser Maschinentakt ist durch die automatische Fertigung der Ampulle gegeben und kann nicht wesentlich verändert werden. Innerhalb eines Maschinentakts $t_m$ müssen somit alle Bearbeitungsschritte an einer Ampulle, wie z.B. Beschneiden, Beschichten oder Prüfen stattfinden. Mit $t_p$ ist im Diagramm die Zeit dargestellt, während der die Ampulle in Bearbeitungsposition in der Halterung 11 eingespannt ist. Während der Zeit $t_f$ wird Masse aus der Kanüle 7 ausgestossen. Diese Zeit $t_f$ kann an der Steuervorrichtung 14 eingestellt werden und ist ersichtlicherweise kleiner als $t_p$. Der Ausstoss der Masse erfolgt mit einer Einschaltverzögerung $t_d$ und nach dem Ende des Massenausstosses $t_f$ verbleibt eine Zeitspanne $t_v$ bis zum Entfernen der Ampulle aus der Halterung 11. Diese Zeitspanne $t_v$ kann beispielsweise eingesetzt werden, um an der rotierenden Ampulle mit der tangential anliegenden Kanüle die Masse am Umfang gleichmässig zu verteilen.

Mittels der Figur 3 wird anschliessend das Anbringen einer ringförmigen Fritte beschrieben. Dargestellt ist eine Ansicht der an der Ampulle 2 anliegenden Kanüle 7 und ein Querschnitt durch die Berührungsebene Ampulle/Kanüle. Die Ampulle 2 hat normalerweise eine Einschnürung 5, an die sich eine Erweiterung in Form einer Zwiebel 6 anschliesst. Es kann sich aber auch um eine sogenannte Zylinderspiessampulle ohne Einschnürung und Zwiebel handeln. An der Zwiebel 6 ist der Spiess 4 angeformt, welcher in die nicht dargestellte Ampullenöffnung ausläuft und nach dem Füllen zugeschmolzen wird. Der optische Abtastfühler 15 ist im Ausführungsbeispiel auf den Spiess 4 gerichtet, was jedoch nicht zwingend erforderlich ist. Die Ampulle 2 wird in der Halterung 11 in Pfeilrichtung E um ihre Mittelachse gedreht. Die Kanüle 7 liegt tangential an der Ampulle an und zwar derart, dass die Öffnung der Kanüle etwas oberhalb der Mittelachse liegt. Die Kanüle weist mit ihrer Öffnung stets in Drehrichtung E. Der Winkel $\alpha$ zwischen der Mittelachse der Ampulle und der Achse der Kanüle beträgt genau 90°. Der Innendurchmesser der Kanüle kann beispielsweise etwa 0,3 mm betragen. Die Dauer des Druckstosses $t_f$ kann etwa 0,4 Sekunden und der Druck kann etwa 0,6 bar betragen. $t_p$ kann etwa 1 Sekunde und $t_d$ etwa 0,3 Sekunden

0128859

betragen. Die Masse 1 wird auf die rotierende Ampulle 2 als Streifen aufgetragen und anschliessend durch die tangential anliegende Kanüle 7 gleichmässig verteilt.

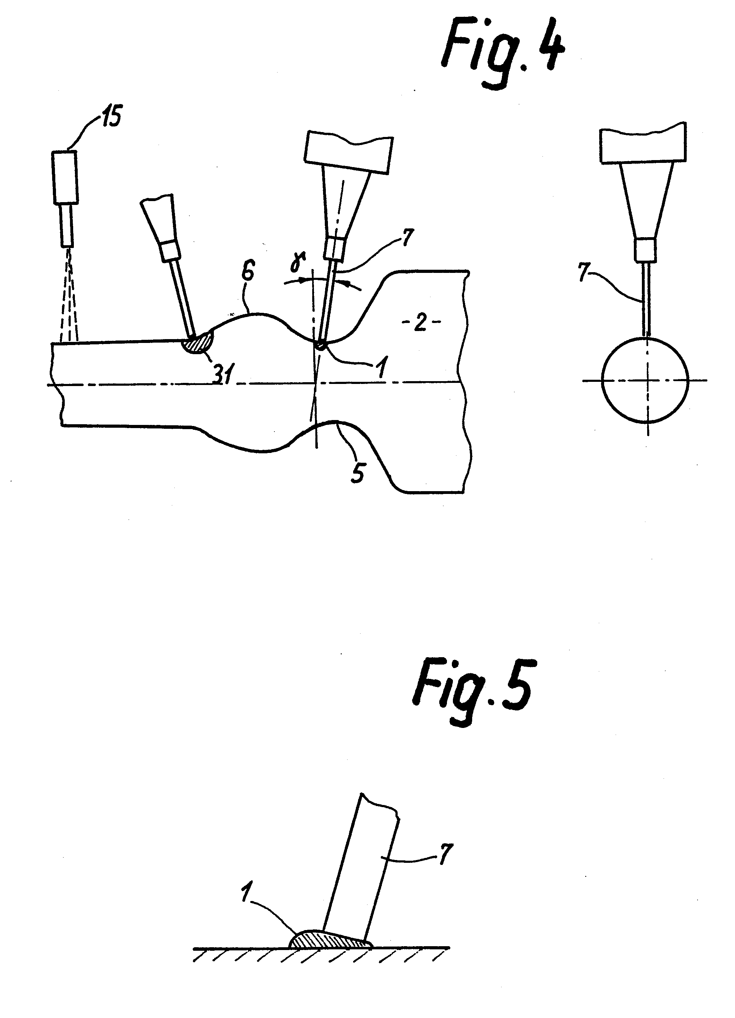

Das Anbringen eines punktförmigen Auftrags ist in den Figuren 4 und 5 dargestellt. Konfiguration der Ampulle und Anordnung des optischen Abtastfühlers 15 sind gleich wie bei Figur 3. Die Ampulle rotiert jedoch nicht um ihre Mittelachse, sondern ist in der Halterung 11 fest eingespannt. Auch die Relativlage der Kanüle 7 zur Mittelachse der Ampulle 2 ist nicht gleich wie beim Anbringen einer ringförmigen Fritte. Die Kanüle 7 ist unter einem Winkel $\gamma$ genau auf die Mittelachse der Ampulle 2 gerichtet. Die Abweichung der Kanüle aus der Senkrechten zur Mittelachse ist erforderlich, um den Austritt der Masse 1 aus dem Kanülenende zu erleichtern, wie dies in Figur 5 dargestellt ist.

Beim punktförmigen Massenauftrag kann der Innendurchmesser der Kanüle etwa 0,22 mm betragen. Der Arbeitsdruck kann etwa 0,5 bar und die Zeitspanne $t_f$ etwa 0,3 Sekunden betragen. Die Zeitspanne $t_p$ beträgt ebenfalls etwa 1 Sekunde, so dass die Zeitspannene $t_d$ und $t_v$ entsprechend länger werden. Besonders wichtig ist es beim Anbringen des punktförmigen Auftrags, dass dieser im Bereich des Übergangs vom Ampullenkörper in den Spiess bzw. im Bereich der Einschnürung 5 erfolgt. Auf der gleichen, parallel zur Mittelachse verlaufenden Mantellinie, auf der der Punkt 1 liegt, kann eine Farbmarkierung 31 angebracht werden. Die Farbmarkierung zeigt dem Verbraucher an, wie die Ampulle zum Aufbrechen zu halten ist. Das Anbringen der Farbmarkierung kann mit einer ähnlichen Vorrichtung erfolgen, wie das Anbringen des Brechpunktes. Der Auftrag kann gleichzeitig erfolgen.

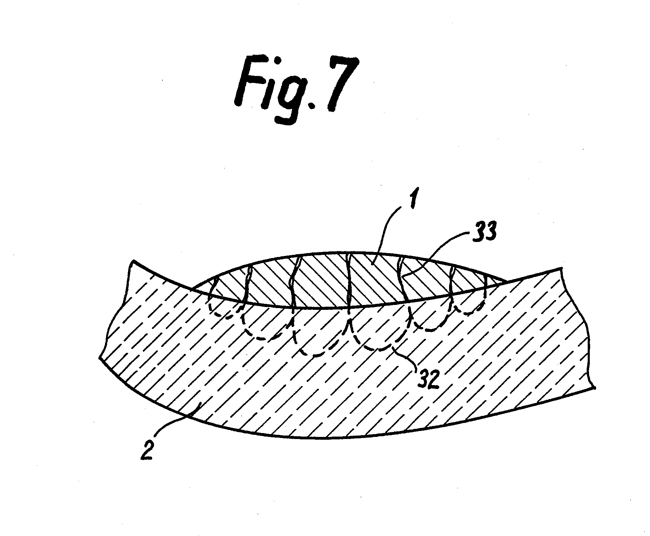

Der Durchmesser des punktförmigen Auftrags liegt zwischen 1 bis 2,5 mm, vorzugsweise zwischen 1,5 und 2 mm. Diese Werte beziehen sich auf Ampullen der handelsüblichen Abmessungen. Wie insbesondere in Figur 7 ersichtlich ist, hat der punktförmige Auftrag 1 eine Schichtdicke, welche im Zentrum am grössten ist und gegen den Rand hin abnimmt. Unter der Fritte sind die in das Glas der
Ampulle einlaufenden Risse 32 zu sehen, welche die Sollbruchstelle bewirken. In der Fritte bilden sich nach dem Einbrennen
Oberflächenrisse 33, welche etwa senkrecht zur Ampullenoberfläche verlaufen. Die Eindringtiefe der Risse 32 nimmt mit wachsender Schichtdicke der punktförmigen Fritte 1 zu.

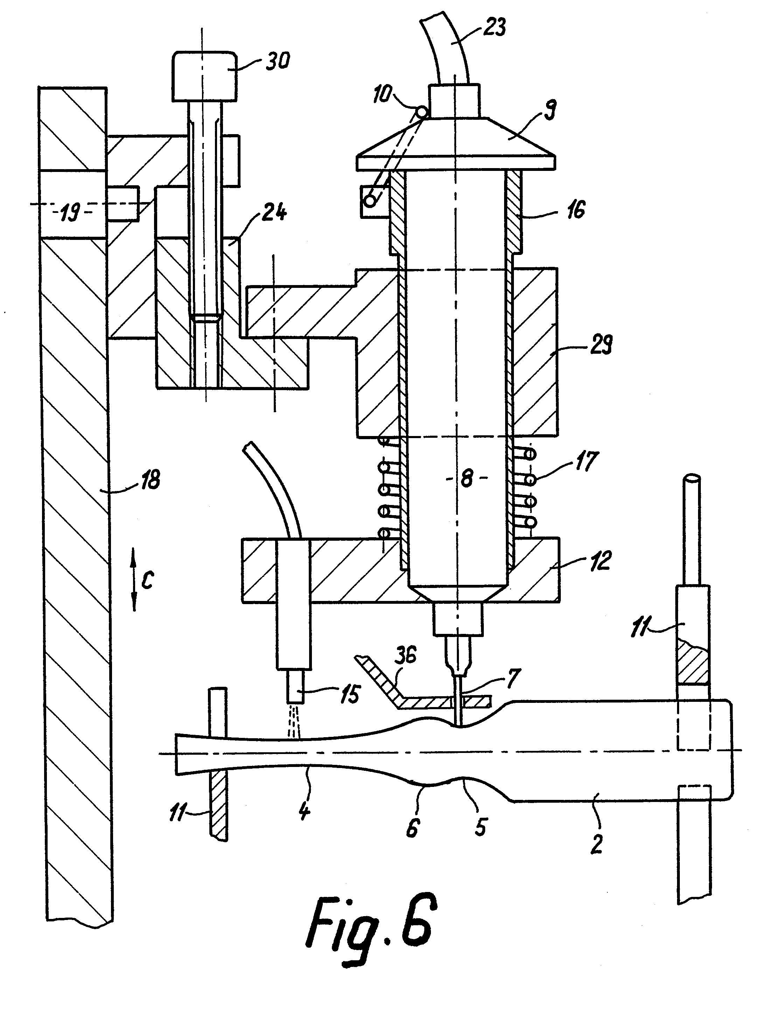

In Figur 6 ist die Haltevorrichtung 12 mit der Kanüle 7 etwas
genauer dargestellt. Die Haltevorrichtung 12 weist ein Patronenlager 16 auf, in welches eine Vorratspatrone 8 eingeschoben
werden kann. Die Kanüle 7 ist mit der Vorratspatrone 8 fest verbunden. Ein Deckel 9, in den ein Druckschlauch 23 mündet, verschliesst die Vorratspatrone 8. Ein Klemmbügel 10 sorgt dafür,
dass die Vorratspatrone 8 immer bis zum Anschlag in das Patronenlager 16 eingeschoben ist. Die Vorratspatronen 8 sind als
serienmässig gefertigte Artikel im Handel erhältlich. Sie bestehen vorzugsweise aus Kunststoffmaterial und können mit verschiedenen Kanülen 7 ausgerüstet werden.

Das Patronenlager 16 ist in einem Führungsrohr 29 verschiebbar
gelagert. Das Führungsrohr 29 ist Bestandteil der Führungsvorrichtung 18. Zwischen der Haltevorrichtung 12 und dem Führungsrohr ist eine Druckfeder 17 angeordnet, so dass in angehobener
Position der Haltevorrichtung das Patronenlager immer in der
untersten Endlage verbleibt. Sobald die Kanüle 7 mit der Ampulle
2 in Berührung kommt, gleitet das Patronenlager 16 im Führungsrohr 29 nach oben, so dass die Kanüle 7 unter Federvorspannung
auf der Ampulle 2 anliegt. Zur besonders präzisen Führung der
Kanüle ist unmittelbar über der Ampulle eine Kanülenführung 36
montiert. Diese ist relativ zur Haltevorrichtung 12 fest und
weist eine Bohrung auf, in der die Kanüle 7 auf- und ab gleiten
kann.

Die Führungsvorrichtung 18 kann in Pfeilrichtung C angehoben
bzw. abgesenkt werden. Die Bewegung erfolgt z.B. durch konventionelle Pneumatik- oder Hydraulik-Zylinder. Für die richtige Einstellung der Haltevorrichtung 12 können verschiedene Justier-
oder Verstellmechanismen vorgesehen sein. Nur beispielsweise ist
in Figur 6 eine Höhenverstellung 24 dargestellt, an der mit
Hilfe einer Stellschraube die Arbeitshöhe der Haltevorrichtung
12 eingestellt werden kann. Selbstverständlich sind auch noch
andere Justiervorrichtungen vorgesehen, um die Mittelachse der
Vorratspatrone 8 relativ zur Mittelachse der Ampulle 2 in jede
gewünschte Position zu bringen.

An der Führungsvorrichtung 18 ist ein Pendellager 19 vorgesehen,
um dessen Achse die Kanüle 7 quer zur Mittelachse der Ampulle 2
verschwenkt werden kann, wie dies in Figur 3 dargestellt ist.
Das Pendellager 19 ist erforderlich, wenn eine ringförmige Fritte aufgetragen werden soll. Zum Auftragen einer punktförmigen
Fritte wird das Pendellager arretiert, so dass die Kanüle 7 die
in Figur 4 dargestellte Lage einnimmt.

Der optische Abtastfühler 15 wird besonders vorteilhaft unmittelbar im Bereich der Kanüle 7 angeordnet. Als Abtastfühler kann
eine an sich bekannte faseroptische Einrichtung verwendet werden.

Zum Auswechseln einer Vorratspatrone 8 wird der Klemmbügel 10
geöffnet und die Vorratspatrone aus dem Patronenlager 16 entfernt. Der Deckel 9 mit dem Druckschlauch 23 wird entfernt und
auf eine neue, mit Masse gefüllte Vorratspatrone 8 aufgesetzt.
Diese wird in das Patronenlager 16 eingeschoben und der Klemmbügel 10 wird wieder geschlossen. Der Austausch einer Vorratspatrone erfordert somit nur wenige Handgriffe, ohne dass irgendwelche Reinigungsarbeiten an der Vorrichtung erforderlich sind.
Bei einmal eingestellter Haltevorrichtung 12 ist die Kanüle 7
bei jeder neu eingesetzten Vorratspatrone immer in der richtigen
Arbeitsposition. Zwischen den einzelnen Arbeitstakten kann über
den Druckschlauch 23 im innern der Vorratspatrone 8 ein Vakuum
erzeugt werden. Dadurch wird über die Kanüle 7 eine geringe
Luftmenge angesaugt, was zu einer dauernden Durchmischung der in

- 13 -

0128859

der Vorratspatrone 8 lagernden Masse führt. Die verschiedenen elektronischen, optischen und pneumatischen Hilfsmittel zum Betrieb der Vorrichtung sind dem Fachmann bekannt und werden hier nicht näher beschrieben.

Denkbar wäre es z.B. auch, nur die Kanüle in die Haltevorrichtung 12 einzuspannen und den Vorratsbehälter mit der Masse 1 andernorts zu befestigen und über einen flexiblen Schlauch mit der Kanüle zu verbinden. Dadurch würde die zu bewegende Masse ersichtlicherweise reduziert.

- 1 -                                          0128859

<div align="center"><u>PATENTANSPRÜCHE</u></div>

1.  Verfahren zum Auftragen einer flüssigen oder pastösen Masse
    (1) auf Glasampullen (2), wobei die Masse einen grösseren
    Kontraktionskoeffizienten aufweist als der des Glases, und
    zum Erzielen einer vorbestimmten Bruchstelle (3) auf einer
    Ampulle durch Erhitzen zu einer Fritte erhärtet wird, d a -
    d u r c h   g e k e n n z e i c h n e t, dass jeweils wenig-
    stens eine Ampulle (2) in einer vorbestimmten Relativlage
    gehalten wird, dass das Ende einer Kanüle (7) mit der Oberfläche der Ampulle in Berührung gebracht wird, und dass die
    Masse (1) mit einem Druckstoss aus der Kanüle auf die Ampulle gepresst wird.

2.  Verfahren nach Anspruch 1, d a d u r c h   g e k e n n -
    z e i c h n e t,  dass vor dem Auslösen des Druckstosses das
    Vorhandensein einer Ampulle in der gewünschten Relativlage
    abgetastet wird, und dass der Druckstoss beim Fehlen einer
    Ampulle oder bei einem Abweichen von der gewünschten Relativlage unterbleibt.

3.  Verfahren nach Anspruch 2, d a d u r c h   g e k e n n -
    z e i c h n e t,  dass das Abtasten optisch erfolgt.

4.  Verfahren nach einem der Ansprüche 1 bis 3, d a d u r c h
    g e k e n n z e i c h n e t,  dass die Kanüle (7) zum Auftragen eines Punktes von oben auf die Ampulle abgesenkt
    wird, wobei die Kanüle auf die Mittelachse der Ampulle gerichtet ist.

5. Verfahren nach einem der Ansprüche 1 bis 3, d a d u r c h g e k e n n z e i c h n e t, dass die Kanüle zum Auftragen eines Ringes oberhalb der Mittelachse tangential an die Ampulle angelegt wird und dass die Ampulle in ihrer Relativlage um die Mittelachse gedreht wird.

6. Verfahren nach Anspruch 4, d a d u r c h g e k e n n z e i c h n e t, dass auf der gleichen, parallel zur Mittelachse verlaufenden Mantellinie, auf welcher der Punkt liegt, eine Farbmarkierung aufgetragen wird.

7. Verfahren nach Anspruch 4 oder 5, d a d u r c h g e k e n n z e i c h n e t, dass nach dem Auslösen des Druckstosses das Vorhandensein der Masse auf der Ampulle optisch abgetastet wird, und dass Ampullen mit fehlerhaftem oder fehlendem Auftrag mit einer Ausstossvorrichtung (20) ausgeschieden werden.

8. Verfahren nach Anspruch 4 oder 5, d a d u r c h g e k e n n z e i c h n e t, dass die Masse aus einer austauschbaren Vorratspatrone (8) aufgetragen wird.

9. Vorrichtung zur Durchführung des Verfahrens nach Anspruch 1, g e k e n n z e i c h n e t d u r c h eine Halterung (11) zum Festhalten einer Ampulle (2), eine Haltevorrichtung (12) zur Aufnahme einer Kanüle (7), eine Führungsvorrichtung (18) zum Bewegen der Haltevorrichtung (12), eine Druckerzeugungsvorrichtung (13) zum Auspressen der Masse (1) aus der Kanüle (7) und eine Steuervorrichtung (14) zum Steuern der Führungsvorrichtung (18) und der Druckerzeugungsvorrichtung (13).

10. Vorrichtung nach Anspruch 9, d a d u r c h g e k e n n z e i c h n e t, dass die Haltevorrichtung einen optischen Abtastfühler (15) aufweist.

11. Vorrichtung nach Anspruch 9 oder 10, d a d u r c h   g e -
k e n n z e i c h n e t, dass die Haltevorrichtung (12) ein
Patronenlager (16) zur Aufnahme einer austauschbaren Vorratspatrone (8) für die Masse aufweist, und dass die Kanüle
(7) fest mit der Vorratspatrone (8) verbunden ist.

12. Vorrichtung nach Anspruch 11, d a d u r c h   g e k e n n -
z e i c h n e t, dass die Haltevorrichtung (12) eine Spannvorrichtung (10) zum Einspannen der Vorratspatrone (8) in
das Patronenlager (16) aufweist.

13. Vorrichtung nach Anspruch 12, d a d u r c h   g e k e n n -
z e i c h n e t, dass die Haltevorrichtung in vertikaler
Richtung federnd mit der Führungsvorrichtung verbunden ist.

14. Vorrichtung nach einem der Ansprüche 9 bis 13, d a -
d u r c h   g e k e n n z e i c h n e t, dass die Führungsvorrichtung (18) zum Anheben und Absenken der Haltevorrichtung (12) in vertikaler Richtung bewegbar ist.

15. Vorrichtung nach Anspruch 14, d a d u r c h   g e k e n n -
z e i c h n e t, dass die Kanüle in einer relativ zur Haltevorrichtung (12) fest montierten Kanülenführung (36) geführt ist.

16. Vorrichtung nach Anspruch 14, d a d u r c h   g e k e n n -
z e i c h n e t, dass die Haltevorrichtung derart über ein
Pendellager (19) mit der Führungsvorrichtung (18) verbunden
ist, dass die Kanüle quer zur Mittelachse der Ampulle verschwenkbar ist.

17. Vorrichtung nach einem der Ansprüche 9 bis 16, d a d u r c h
g e k e n n z e i c h n e t, dass sie eine optische Abtastvorrichtung zum Prüfen des Auftrags und eine Ausstossvorrichtung (20) zum Ausstossen von Ampullen mit fehlerhaftem
oder fehlendem Auftrag aufweist.

18. Ampulle, insbesondere hergestellt nach dem Verfahren nach Anspruch 1, mit einem etwa zylindrischen Ampullenkörper und einem vom Ampullenkörper abbrechbaren Spiess, d a d u r c h g e k e n n z e i c h n e t, dass die Masse (1) im Bereich des Übergangs vom Ampullenkörper in den Spiess punktförmig aufgetragen ist.

19. Ampulle nach Anspruch 18, d a d u r c h g e k e n n - z e i c h n e t, dass die Masse im Bereich einer Einschnürung zwischen Ampullenkörper und Spiess aufgetragen ist.

20. Ampulle nach Anspruch 18 oder 19, d a d u r c h g e - k e n n z e i c h n e t, dass der punktförmige Auftrag einen Durchmesser von 1 bis 2,5 mm aufweist.

21. Ampulle nach Anspruch 20, d a d u r c h g e k e n n - z e i c h n e t, dass die Schichtdicke des punktförmigen Auftrags im Zentrum am grössten ist und gegen den Randbe- reich hin abnimmt.

Fig.1

*Fig.2*

*Fig.3*

Fig. 4

Fig. 5

0128859

Fig.6

# Fig.7

## EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| D,Y | FR-A-1 122 010 (OWENS-ILLINOIS GLASS) <br> * Seite 1, linke Spalte, unten; Seite 3, linke Spalte, Seitenmitte * | 1,9 | B 05 D 1/26 <br> B 05 C 5/02 <br> A 61 J 1/06 <br> C 03 B 33/06 |
| A | | 5 | |
| | --- | | |
| Y | DE-B-2 915 006 (TRIUMPF WERKE) <br> * Insgesamt * | 1,9 | |
| A | | 2-4,10 | |
| | --- | | |
| D,A | DE-C- 867 291 (OWENS ILLINOIS GLASS) <br> * Ansprüche * | 1 | |
| A | DE-B-1 096 546 (H. STRUNCK & CO., MASCHINENFABRIK) <br> * Insgesamt * | 1,4 | RECHERCHIERTE SACHGEBIETE (Int. Cl. 3) <br><br> B 05 D <br> B 05 C <br> A 61 J <br> C 03 B |
| | --- | | |
| A | DE-A-2 746 605 (KLÖCKNER-HUMBOLDT-DEUTZ) <br> * Seite 6, oben * | 1,2,8 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 31-07-1984 | FRIDEN N. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

......................................................................

& : Mitglied der gleichen Patentfamilie, übereinstimmendes Dokument

EPA Form 1503. 03.82

Europäisches
Patentamt

**EUROPÄISCHER RECHERCHENBERICHT**

0128859
Nummer der Anmeldung

EP 84 81 0154

| | **EINSCHLÄGIGE DOKUMENTE** | | Seite 2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| A,D | DIE PHARMAZEUTISCHE INDUSTRIE, Band 30, 1968, Seiten 15,16, Aulendorf, DE; K. KRISTEN: "Erzeugung von Sollbruchstellen bei Gläsern durch aufgeschmolzene Emails, insbesondere zur Herstellung von Brechampullen"<br><br>----- | 1 | |
| | | | RECHERCHIERTE SACHGEBIETE (Int. Cl. ³) |

Der vorliegende Recherchenbericht wurde für alle Patentansprüche erstellt.

| Recherchenort | Abschlußdatum der Recherche | Prüfer |
|---|---|---|
| DEN HAAG | 31-07-1984 | FRIDEN N. |